# EUROPEAN PATENT APPLICATION

(11) **EP 2 145 930 A1**
(43) Date of publication of application: **20.01.2010**
(21) Application number: 08752322.1
(22) Date of filing: 02.05.2008
(51) Int. Cl.: C09D 4/00, B41J 2/01, B41M 5/00, B41M 5/50, B41M 5/52, C09D 133/26, C09D 175/04, G11B 7/24, G11B 7/254, G11B 7/257

(54) **ULTRAVIOLET-CURABLE COATING AGENT AND MOLDED ARTICLE**

(30) Priority: 09.05.2007 JP 2007124821
(71) Applicant: Idemitsu Technofine Co. Ltd, Sumida-ku, Tokyo 130-0015 (JP)
(72) Inventor: TSUBOKURA, Yutaka, Sodegaura-shi Chiba 299-0205 (JP); MACHIDA, Yoshinori, Tokyo 130-0015 (JP); FUKATSU, Fumioki, Sodegaura-shi Chiba 299-0205 (JP)
(74) Representative: Clarke, Lionel Paul
(86) International application number: PCT/JP2008/058417
(87) International publication number: WO 2008/139973

(57) **Abstract**

A ultraviolet-curable coating agent contains: a hydrophilic polymer having the specific structure represented by the following general formula (1); a polymerization-reactive urethane oligomer; a water-soluble monomer; a photo polymerization initiator; and a water-absorptive filler. The polymerization-reactive urethane oligomer is preferably formed of a carboxyl-group-containing dihydroxyl compound, polymer polyol, organic diisocyanate compound and hydroxyl-group-containing acrylic ester, and a number average molecular weight of the polymerization-reactive urethane oligomer is preferably 1000 to 10000. By applying the ultraviolet-curable coating agent onto a front face of a substrate, an ink-receiving layer having excellent ink absorptivity, drying characteristics of printed images, bleeding resistance, anti-tacking and water resistance can be formed. 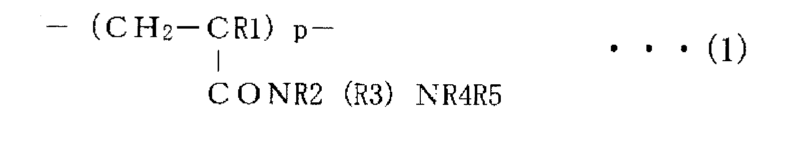 where: P represents an integer of 2 or more;
R1 represents -H or -CH₃;
R2 represents -H or an alkyl group represented by -CₘH₂ₘ+1 (in which m is an integer of 1 to 8);
R3 represents an alkylene group represented by -CₙH₂ₙ- (in which n is an integer of 1 to 8); and
R4 and R5 each represent -H or an alkyl group represented by -CₒH₂ₒ+1 (in which o is an integer of 1 to 8).

## Description

### Technical Field

The present invention relates to an ultraviolet-curable coating agent curable by ultraviolet, and a molded product coated with the ultraviolet-curable coating agent.

### Background Art

To date, in fields such as information processing, information recording mediums for electrically recording information for reproduction and re-recording are widely used. Known examples of such an information recording medium are: information recording mediums where resin substrates are provided with information recording layers, such as compact discs (CD) and digital versatile discs (DVD), i.e., optical information recording mediums; and information recording mediums where information recording sections are housed in resin substrates (e.g., cartridges), such as flexible discs (FD), magnet-optical (MO) discs, mini discs (MD) and cassette tapes.
While exhibiting information recording performance, many of such information recording mediums are printed with indexes for indicating the recorded contents and various decorations on their front faces. The printing is performed by a known method such as ink-jet printing and screen printing.

The front faces of the resin substrates for providing such information recording mediums are not ink-absorbable. In order to perform ink-jet printing onto the front faces, the front faces of the resin substrates are provided with ink-receiving layers, so that the printing is performed onto such ink-receiving layers. For instance, according to sheets capable of serving as label sheets to be printed by ink-jet printers and CD-R (CD-Recordable), ink-receiving layers are provided on front surfaces of the paper substrates and the resin substrates by coating or printing.
As coating agents for providing the ink-receiving layers, ultraviolet-curable coating agents are used. The ink-receiving layers provided by these coating agents are required to exhibit excellent ink-absorptivity, for which several proposals have been made (see, for instance, Patent Documents 1 to 4).

The coating agent according to Patent Document 1 contains: liquid water-soluble monomer such as multivalent alcohols, i.e., radiation-polymerized monomer soluble in water at a suitable ratio at normal temperature; and water-absorptive polymer, i.e., resin powder insolubilized in water and any other solvent by cross-linking water-soluble polymers having a number of hydrophilic groups in their molecular structures.
The coating agent according to Patent Document 2 contains: liquid water-soluble monomer such as multivalent alcohols, i.e., radiation-polymerized monomer soluble in water at a suitable ratio at normal temperature; monomer-soluble and hydrophobic polymer soluble in this water-soluble monomer but swellable by water absorption or substantially insoluble in water when formed into films; and natural fiber powder such as cellulose fiber powder and polypeptide fiber powder, additive amount of the natural fiber powder being 15 to 300 parts by weight relative to 100 parts by weight of the water-soluble monomer.
The coating agent according to Patent Document 3 contains: liquid water-soluble monomer such as multivalent alcohols, i.e., radiation-polymerized monomer soluble in water at a suitable ratio at normal temperature; hydrophobic polymer soluble in this water-soluble monomer but swellable by water absorption or substantially insoluble in water when formed into films; and inorganic fillers such as silica, synthetic mica, aluminum hydroxide and alumina.
The coating agent according to Patent Document 4 is prepared such that the total content of acryloyl morpholine, alkyloxymethylacrylamide and methoxy polyethylene glycol (mono)acrylate is 25 to 70 parts by weight in 100 parts by weight of ultraviolet curable ink.

**Patent Document 1:** JP-A-11-116875
**Patent Document 2:** JP-A-10-259340
**Patent Document 3:** JP-A-2000-34435
**Patent Document 4:** JP-A-2002-332431

### Disclosure of Invention

### Problems to Be Solved By Invention

Required printability of the ink-receiving layers includes not only excellent ink absorptivity but also drying characteristics of printed images, bleeding resistance of printed images, anti-tacking and water resistance. However, none of the conventional coating agents such as those disclosed in Patent Documents 1 to 4 can provide sufficient printability, so that coating agents capable of providing favorable printability have been in demand.

In view of the above points, an object of the invention is to provide an ultraviolet-curable coating agent and molded products capable of providing excellent printability.

### Means for Solving the Problems

An ultraviolet-curable coating agent according to an aspect of the invention contains: a hydrophilic polymer; a photo polymerization initiator, wherein the hydrophilic polymer has a structure represented by a general formula (1) as follows,

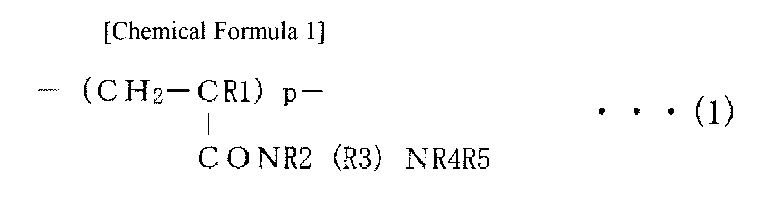

where: P represents an integer of 2 or more;
R1 represents -H or -CH₃;
R2 represents -H or an alkyl group represented by -CₘH₂ₘ+1 (in which m is an integer of 1 to 8);
R3 represents an alkylene group represented by -CₙH₂ₙ- (in which n is an integer of 1 to 8); and
R4 and R5 each represent -H or an alkyl group represented by -CₒH₂ₒ+1 (in which o is an integer of 1 to 8),

A material for the polymerization-reactive urethane oligomer is a carboxyl-group-containing dihydroxyl compound, polymer polyol, organic diisocyanate compound and hydroxyl-group-containing acrylic ester, a number average molecular weight of the polymerization-reactive urethane oligomer being 1000 to 10000.
According to the aspect of the invention, the hydrophilic polymer, polymerization-reactive urethane oligomer, water-soluble monomer and photo polymerization initiator are used in combination.
With this arrangement, the ink-receiving layer provided, for instance, by layer forming can exhibit excellent ink absorptivity. In addition, drying characteristics of printed images, bleeding resistance of printed images, anti-tacking and water resistance are favorable, and excellent printability is obtainable. Further, since no excessive energy is required to be given to the application target as compared to thermal curing, the application target is not degraded.

In addition, since the hydrophilic polymer has the specific structure represented by the general formula (1) and exhibits high water absorptivity, the hydrophilic polymer is highly capable of absorbing water-based ink. Thus, the ink-receiving layer provided, for instance, by layer forming can provide more excellent printability.

Further, since the material for the polymerization-reactive urethane oligomer is a carboxyl-group-containing dihydroxyl compound, polymer polyol, organic diisocyanate compound and hydroxyl-group-containing acrylic ester, the addition of the polymerization-reactive urethane oligomer can particularly enhance anti-tacking and water resistance.
The polymerization-reactive urethane oligomer has a number average molecular weight of 1000 to 10000, preferably 1200 to 8000. Thus, the polymerization-reactive urethane oligomer for providing excellent printability can be easily prepared.
When the number average molecular weight of the polymerization-reactive urethane oligomer is less than 1000, the printability at the ink-receiving layer provided, for instance, by layer forming may be deteriorated. In particular, drying characteristics, bleeding resistance, anti-tacking and water resistance may be deteriorated. On the other hand, when the number average molecular weight of the polymerization-reactive urethane oligomer is more than 10000, in-system viscosity at the time of synthetic reactions (i.e., preparation of the polymerization-reactive urethane oligomer) may be increased, thereby making the synthesis difficult.

Preferably in the aspect of the invention, the hydrophilic polymer is a polymer formed only of N,N-dimethylaminopropyl acrylamide.
According to the aspect of the invention, the use of the polymer having the specific structure formed only of N,N-dimethylaminopropyl acryl amide as the hydrophilic polymer can favorably balance the water absorptivity and hydrophobicity. Thus, the ink-receiving layer formed, for instance, by layer forming can exhibit both absorptivity of water-based ink and water resistance, thereby providing more excellent printability.

Preferably in the aspect of the invention, the hydrophilic polymer has a weight average molecular weight of 5000 to 300000.
According to the aspect of the invention, the use of the polymer having the weight average molecular weight of 5000 to 300000 as the hydrophilic polymer can prevent reduction in anti-tacking due to low-molecular-weight components and the non-uniformity in the applied layer due to increase of the viscosity in the coating agent brought about by high-molecular-weight components. Thus, the ink-receiving layer formed, for instance, by layer forming can exhibit more excellent printability.
When the weight average molecular weight of the hydrophilic polymer is less than 5000, the printability at the ink-receiving layer provided, for instance, by layer forming may be deteriorated. In particular, drying characteristics, bleeding resistance, anti-tacking and water resistance may be deteriorated. On the other hand, when the weight average molecular weight of the hydrophilic polymer is more than 300000, in-system viscosity at the time of synthetic reactions (i.e., preparation of the hydrophilic polymer) may be increased, thereby making the synthesis difficult. Accordingly, the hydrophilic polymer has a weight average molecular weight of 5000 to 300000, preferably 7000 to 26000.

Preferably in the aspect of the invention, the carboxyl-group-containing dihydroxyl compound has a number average molecular weight of 50 to 200, the carboxyl-group-containing dihydroxyl compound being at least one compound selected from dimethylol propionic acid and dimethylol butane acid.
According to the aspect of the invention, as the carboxyl-group-containing dihydroxyl compound (i.e., material for the polymerization-reactive urethane oligomer), dimethylol propionic acid and/or dimethylol butane acid having a number average molecular weight of 50 to 200 are used.
Accordingly, since the materials are excellent particularly in drying characteristics and bleeding resistance, the polymerization-reactive urethane oligomer (material for providing excellent printability) can be easily prepared.

Preferably in the aspect of the invention, the polymer polyol has a number average molecular weight of 300 to 2000, the polymer polyol being at least one compound selected from polycarbonate diol, polyethylene glycol and polypropylene glycol.
According to the aspect of the invention, as the polymer polyol (i.e., material for the polymerization-reactive urethane oligomer), polycarbonate diol, polyethylene glycol and/or polypropylene glycol having a number average molecular weight of 300 to 2000 are used.
Accordingly, since the materials are excellent particularly in drying characteristics and bleeding resistance, the polymerization-reactive urethane oligomer (material for providing excellent printability) can be easily prepared.

Preferably in the aspect of the invention, the organic diisocyanate compound is at least one compound selected from 2,4-toluene diisocyanate, 2,6-toluene diisocyanate, isophorone diisocyanate, hexamethylene diisocyanate, diphenylethylene diisocyanate, xylene diisocyanate, methylenebis(cyclohexyl isocyanate) and trimethylhexamethylene diisocyanate.
According to the aspect of the invention, as the organic diisocyanate compound (i.e., material for the polymerization-reactive urethane oligomer), at least one compound selected from 2,4-toluene diisocyanate, 2,6-toluene diisocyanate, isophorone diisocyanate, hexamethylene diisocyanate, diphenylethylene diisocyanate, xylene diisocyanate, cyclohexyl isocyanate and trimethylhexamethylene diisocyanate, which are particularly excellent in anti-tacking and water resistance, is used. Thus, the polymerization-reactive urethane oligomer for providing excellent printability can be easily prepared.

Preferably in the aspect of the invention, the hydroxyl-group-containing acrylic ester is at least one compound selected from 2-hydroxyethyl acrylate, hydroxypropyl acrylate, hydroxybutyl acrylate, caprolactone or alkylene oxide adduct of the 2-hydroxyethyl acrylate, hydroxypropyl acrylate or hydroxybutyl acrylate, and glycerin diacrylate.
As the hydroxyl-group-containing acrylic ester (i.e., material for the polymerization-reactive urethane oligomer), at least one compound selected from 2-hydroxyethyl acrylate, hydroxypropyl acrylate, hydroxybutyl acrylate, caprolactone or alkylene oxide adduct of the 2-hydroxyethyl acrylate, hydroxypropyl acrylate or hydroxybutyl acrylate, and glycerin diacrylate, which are particularly excellent in curability of the applied layer, is used. Thus, the polymerization-reactive urethane oligomer for providing excellent printability can be easily prepared.

Preferably in the aspect of the invention, the water-soluble monomer contains 50 mass% or more of acryloyl morpholine.
According to the aspect of the invention, since the water-soluble monomer containing 50 mass% or more of acryloyl morpholine is used, the addition of the monomer can particularly enhance drying characteristics and bleeding resistance. Thus, the ink-receiving layer formed, for instance, by layer forming can provide excellent printability.
When the content of acryloyl morpholine is less than 50 mass%, the printability at the ink-receiving layer provided, for instance, by layer forming may be deteriorated. In particular, drying characteristics and bleeding resistance of the printed images may be deteriorated. It is accordingly preferable that the content of acryloyl morpholine is 50 mass% or more.

Preferably in the aspect of the invention, a content of the hydrophilic polymer is 5 mass% to 50 mass%, a content of the polymerization-reactive urethane oligomer is 3 mass% to 30 mass%, a content of the water-soluble monomer is 10 mass% to 91 mass%, and a content of the photo polymerization initiator is 1 mass% to 10 mass%.
In the ultraviolet-curable coating agent according to the aspect of the invention, the content of the hydrophilic polymer is 5 mass% to 50 mass%, the content of the polymerization-reactive urethane oligomer is 3 mass% to 30 mass%, the content of the water-soluble monomer is 10 mass% to 91 mass% and the content of the photo polymerization initiator is 1 mass% to 10 mass%. Accordingly, the ink-receiving layer formed, for instance, by layer forming can provide more excellent printability.
When the content of hydrophilic polymer is less than 5 mass%, the printability at the ink-receiving layer provided, for instance, by layer forming may be deteriorated. In particular, drying characteristics and bleeding resistance of the printed images may be deteriorated. On the other hand, when the content of hydrophilic polymer is more than 50 mass%, the printability at the ink-receiving layer provided, for instance, by layer forming may be deteriorated. In particular, anti-tacking and water resistance may be deteriorated. Accordingly, the content of the hydrophilic polymer is 5 mass% to 50 mass%, preferably 10 mass% to 40 mass%.
When the content of the polymerization-reactive urethane oligomer is less than 3 mass%, the printability at the ink-receiving layer provided, for instance, by layer forming may be deteriorated. In particular, anti-tacking and water resistance may be deteriorated. On the other hand, when the content of the polymerization-reactive urethane oligomer is more than 30 mass%, the printability at the ink-receiving layer provided, for instance, by layer forming may be deteriorated. In particular, drying characteristics and bleeding resistance of the printed images may be deteriorated. Accordingly, the content of the polymerization-reactive urethane oligomer is 3 mass% to 30 mass%, preferably 5 mass% to 25 mass%.
When the content of the water-soluble monomer is less than 10 mass%, uniform composition may be impaired. On the other hand, when the content of the water-soluble monomer is more than 91 mass%, the printability at the ink-receiving layer provided, for instance, by layer forming may be deteriorated. In particular, drying characteristics and bleeding resistance of the printed images may be deteriorated. Accordingly, the content of the water-soluble monomer is 10 mass% to 91 mass%, preferably 29 mass% to 83 mass%.
When the content of the photo polymerization initiator is less than 1 mass%, curing may be insufficient. On the other hand, when the content of the photo polymerization initiator is more than 10 mass%, anti-tacking may be deteriorated. Accordingly, the content of the photo polymerization initiator is 1 mass% to 10 mass%, preferably 2 mass% to 6 mass%.

Preferably in the aspect of the invention, a water-absorptive filler is contained at a content of 3 mass% to 50 mass% in addition to the hydrophilic polymer, the polymerization-reactive urethane oligomer, the water-soluble monomer and the photo polymerization initiator.
According to the aspect of the invention, since the water-absorptive filler is contained at the content of 3 mass% to 50 mass% in addition to the hydrophilic polymer, the polymerization-reactive urethane oligomer, the water-soluble monomer and the photo polymerization initiator, the ink-receiving layer formed, for instance, by layer forming can provide more excellent printability.
When the content of the water-absorptive filler is less than 3 mass%, water-based ink may not be sufficiently absorbed. On the other hand, when the content of the water-absorptive filler is more than 50 mass%, viscosity may be increased, thereby hindering the formation of uniform layer. Accordingly, the content of the water-absorptive filler is 3 mass% to 50 mass%, preferably 3 mass% to 45 mass%.

A molded product according to another aspect of the invention includes the above-described ultraviolet-curable coating agent applied on a front face of a substrate.
According to the aspect of the invention, the above-described ultraviolet-curable coating agent according to the aspect of the invention, which is capable of providing the ink-receiving layer formed, for instance, by layer forming with excellent printability, is applied on the front face of the substrate.
Accordingly, printing can be favorably conducted onto substrates having, for instance, no ink-absorptivity or less ink-absorptivity.

Preferably in the aspect of the invention, the ultraviolet-curable coating agent is applied on the front face of the substrate to form an ink-receiving layer.
According to the aspect of the invention, the above-described ultraviolet-curable coating agent according to the aspect of the invention, which is capable of providing excellent printability, is applied onto the front surface of the substrate to form the ink-receiving layer.
Accordingly, printing can be favorably conducted onto substrates having, for instance, no ink-absorptivity or less ink-absorptivity.

### Brief Description of Drawings

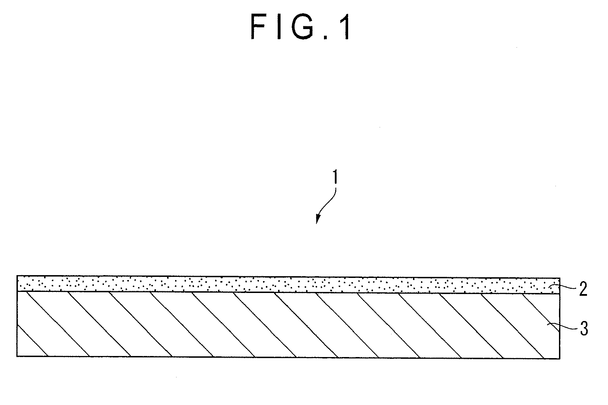

Fig. 1 shows a cross section of an information recording medium according to an exemplary embodiment of the invention.

### Explanation of Codes

- 1: information recording medium as molded product
- 2: ink-receiving layer
- 3: substrate

### Best Mode for Carrying out Invention

The best mode for carrying out the invention will be described in detail below.
In this exemplary embodiment, the molded product according to the aspect of the invention will be exemplified as a disc-shaped information recording medium having an information recording surface on one side and a labeling surface on the other side (e.g., CD-R(compact disc-recordable) and DVD-R(digital versatile disc-recordable)), but is not limited thereto. The invention is applicable to various other substrates such as cartridges that house information recording sections (e.g., flexible disks (FD), magnet-optical (MO) discs, mini discs (MD), cassette tape), printing sheets (e.g., printing label sheets) for use in various information recording mediums, synthetic-resin moldings, glass, wooden materials, steel plates, leather products and woven or nonwoven textiles.
Fig. 1 is cross-sectional view schematically showing a structure of an information recording medium according to this exemplary embodiment.

### [Structure of Molded Product]

In Fig. 1, the numeral 1 denotes an information recording medium (molded product). The information recording medium 1, which is exemplarily a disc recording medium such as CD-R or DVD-R, has an information recording surface (not shown) for recording information on one side and a labeling surface on the other side.
The information recording medium 1 includes: a disk substrate 3; and an ink-receiving layer 2 provided to a front face of the substrate 3 and cured by irradiation of ultraviolet (active energy beam). In the information recording medium 1, the layer on which information is recorded (information recording layer) is included in the layer structure of the substrate 3 in Fig. 1. An example of the substrate 3 is a disk substrate formed of polycarbonate resin, which is typically used for the information recording medium 1.
The ink-receiving layer 2 is exemplarily formed as a water-based layer by applying a later-described ultraviolet-curable coating agent onto the front face of the substrate 3 by a various method. The applying method may be any suitable one of known coating methods or printing methods such as bar coating, comma coating, knife coating, dye coating, spin coating, screen printing, gravure printing, flexo printing, pad printing and ink-jet printing. In particular, bar coating, spin coating and screen printing are preferable in that these methods are typically used as the applying method for information recording mediums. The active energy beam to be irradiated for curing the applied layer may be any one of various activating energy beams such as ultraviolet, electron beams, X-ray and visible light rays. In particular, curing by ultraviolet irradiation, in which operations are facilitated and general-purpose simple apparatus is usable, is preferable in terms of irradiator configuration and workability and apparatus configuration in the applying process.

### (Composition of Ultraviolet-Curable Coating Agent)

The ultraviolet-curable coating agent for providing the ink-receiving layer 2 contains a hydrophilic polymer, polymerization-reactive urethane oligomer, water-soluble monomer, photo polymerization initiator and water-absorptive filler.
The ultraviolet-curable coating agent may be added as needed with additives such as an antifoaming agent, dispersant, water retention agent, thickener, mold releasing agent, preservative, coloring pigment, water resistant agent, humectants, fluorescent paint and ultraviolet absorbent, as long as advantages of the invention are not impaired. The ultraviolet-curable coating agent may not contain the water-absorptive filler.

The hydrophilic polymer preferably has a structure represented by the following general formula (1).

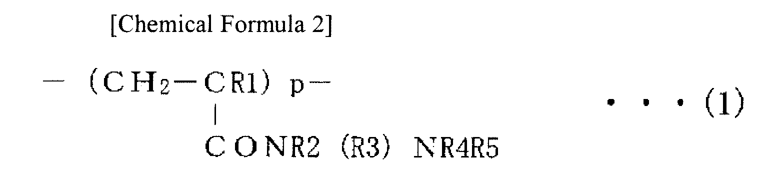

where: P represents an integer of 2 or more;
R1 represents -H or -CH₃;
R2 represents -H or an alkyl group represented by -CₘH₂ₘ+1 (in which m is an integer of 1 to 8);
R3 represents an alkylene group represented by -CₙH₂ₙ- (in which n is an integer of 1 to 8); and
R4 and R5 each represent -H or an alkyl group represented by -CₒH₂ₒ+1 (in which o is an integer of 1 to 8).

In particular, the hydrophilic polymer is preferably a polymer formed only of N,N-dimethylaminopropyl acrylamide.
Further, the hydrophilic polymer preferably has a weight average molecular weight of 5000 to 300000.
When the weight average molecular weight of the hydrophilic polymer is less than 5000, the printability at the ink-receiving layer provided, for instance, by layer forming may be deteriorated. In particular, drying characteristics, bleeding resistance, anti-tacking and water resistance may be deteriorated. On the other hand, when the weight average molecular weight of the hydrophilic polymer is more than 300000, in-system viscosity at the time of synthetic reactions (i.e., preparation of the hydrophilic polymer) may be increased, thereby making the synthesis difficult. Accordingly, the hydrophilic polymer preferably has a weight average molecular weight of 5000 to 300000, more preferably 7000 to 26000.

The polymerization-reactive urethane oligomer is exemplarily an urethane oligomer having reactive double bonds at its terminals.
Particularly, the material for the polymerization-reactive urethane oligomer is preferably a carboxyl-group-containing dihydroxyl compound, polymer polyol, organic diisocyanate compound and hydroxyl-group-containing acrylic ester, and a number average molecular weight of the polymerization-reactive urethane oligomer is preferably 1000 to 10000.
When the number average molecular weight of the polymerization-reactive urethane oligomer is less than 1000, the printability at the ink-receiving layer 2 provided, for instance, by layer forming may be deteriorated. In particular, drying characteristics, bleeding resistance, anti-tacking and water resistance may be deteriorated. On the other hand, when the number average molecular weight of the polymerization-reactive urethane oligomer is more than 10000, in-system viscosity at the time of synthetic reactions (i.e., preparation of the polymerization-reactive urethane oligomer) may be increased, thereby making the synthesis difficult. Accordingly, the polymerization-reactive urethane oligomer preferably has a number average molecular weight of 1000 to 10000, more preferably 1200 to 8000.

As the carboxyl-group-containing dihydroxyl compound (i.e., material for the polymerization-reactive urethane oligomer), use of compounds excellent particularly in drying characteristics and bleeding resistance (e.g., dimethylol propionic acid and dimethylol butane acid of which number average molecular weight is 50 to 200) is preferable.
As the polymer polyol (i.e., material for the polymerization-reactive urethane oligomer), use of compounds excellent in drying characteristics and bleeding resistance (e.g., polycarbonate diol, polyethylene glycol and polypropylene glycol of which number average molecular weight is 300 to 2000) is preferable.

As the organic diisocyanate compound (i.e., material for the polymerization-reactive urethane oligomer), use of at least one compound selected from 2,4-toluene diisocyanate, 2,6-toluene diisocyanate, isophorone diisocyanate, hexamethylene diisocyanate, diphenylethylene diisocyanate, xylene diisocyanate, methylenebis(cyclohexyl isocyanate) and trimethylhexamethylene diisocyanate, which are excellent in anti-tacking and water resistance, is preferable.
As the hydroxyl-group-containing acrylic ester (i.e., material for the polymerization-reactive urethane oligomer), use of at least one compound selected from 2-hydroxyethyl acrylate, hydroxypropyl acrylate, hydroxybutyl acrylate, caprolactone or alkylene oxide adduct of the 2-hydroxyethyl acrylate, hydroxypropyl acrylate or hydroxybutyl acrylate, and glycerin diacrylate, which are particularly excellent in curability of the applied layer, is preferable.
As long as the advantages of the invention are not impaired, another copolymerizable polymerization-reactive oligomer may be contained. The content of such another oligomer is, for instance, 50 mass% or less of the oligomer. As the polymerization-reactive oligomer, oligomers such as urethane acrylate oligomer, epoxy acrylate oligomer, polyester oligomer and acrylic oligomer are preferable, particularly in terms of the enhancement of anti-tacking and water resistance. In addition to the above, for instance, water-soluble oligomers described in pages 84 to 118 of "Photo Cure Technology Data Book, Material Section" (issued on December 5, 2000 by TECHNONET Corporation) are usable.

Usable examples of the water-soluble monomer are various monomers that are soluble in water at a suitable ratio at normal temperature.
Specific examples are acryloyl morpholine, butanediol monoacrylate, 2-hydroxyethyl acrylate, N,N-dimethylamino ethylacrylate, N,N-dimethyl acrylamide and 2-hydroxyethyl vinylether. In addition to the above, for instance, water-soluble oligomers described in pages 6 to 81 of "Photo Cure Technology Data Book, Material Section" (issued on December 5, 2000 by TECHNONET Corporation) are usable. In particular, the water-soluble monomer of which main component is acryloyl morpholine is preferable for its excellent printability.
Use of a water-soluble monomer containing 50 mass% or more of acryloyl morpholine is preferable, particularly in terms of drying characteristics and bleeding resistance.
When the content of acryloyl morpholine is less than 50 mass%, the printability at the ink-receiving layer 2 provided, for instance, by layer forming may be deteriorated. In particular, drying characteristics and bleeding resistance of the printed images may be deteriorated. It is accordingly preferable that the content of acryloyl morpholine is 50 mass% or more.
Another copolymerizable water-soluble monomer may be contained, content of which is 50 mass% or less of the water-soluble monomer. Further, as long as the advantages of the invention are not impaired, non-water-soluble monomer may be contained, content of which is 30 mass% or less of the water-soluble monomer.

Usable examples of the photo polymerization initiator are various polymerization initiators that induce polymerization reactions by reacting with the double bonds in the water-soluble monomer and the polymerization-reactive urethane oligomer due to radical generated by ultraviolet.
Specific examples are hydroxy ketone such as 2-hydroxy-2-methyl-1-phenylpropane-1-one, benzoin ethylether and 1-hydroxy-cyclohexyl-phenyl-ketone, and amino ketone such as 2-methyl-1 [4-(methylthio)phenyl]-2-morpholinopropane-1-one. In addition to the above, for instance, photo polymerization initiators described in pages 122 to 133 of "Photo Cure Technology Data Book, Material Section" (issued on December 5, 2000 by TECHNONET Corporation) are usable. Use of 2-hydroxy-2-methyl-1-phenylpropane-1-one and benzoin ethylether is preferable, particularly in terms of drying characteristics and anti-tacking. The photo polymerization initiator may be a combination of two or more of the above various photo polymerization initiators.

The water-absorptive filler may be inorganic filler or organic filler.
Examples of the inorganic filler are silica, talc, calcium carbonate, barium sulfate and zeolite. Examples of the organic filler are fine powder of natural organic substances such as collagen, silk, cellulose, starch, chitin, chitosan and eggshell membrane, and powder of water-absorptive resin such as water-absorptive acryl resin and water-absorptive polyester resin. One of the above inorganic fillers and organic fillers may be singularly used, or two or more of the above may be combined in use.

It is preferable that the ultraviolet-curable coating agent contains the hydrophilic polymer, the polymerization-reactive urethane oligomer, the water-soluble monomer and the photo polymerization initiator at a ratio satisfying A/B/C/D=(5 to 50)/(3 to 30)/(91 to 10)/(1 to 10), in which: A represents the content [mass%] of the hydrophilic polymer; B represents the content [mass%] of the polymerization-reactive urethane oligomer; C represents the content [mass%] of the water-soluble monomer; and D represents the content [mass%] of the photo polymerization initiator.
When the content of the hydrophilic polymer is less than 5 mass%, the printability at the ink-receiving layer provided, for instance, by layer forming may be deteriorated. In particular, drying characteristics and bleeding resistance of the printed images may be deteriorated. On the other hand, when the content of the hydrophilic polymer is more than 50 mass%, the printability at the ink-receiving layer provided, for instance, by layer forming may be deteriorated. In particular, anti-tacking and water resistance may be deteriorated. It is accordingly preferable that the content of the hydrophilic polymer is 5 mass% to 50 mass%, more preferably 10 mass% to 40 mass%.

When the content of the polymerization-reactive urethane oligomer is less than 3 mass%, the printability at the ink-receiving layer provided, for instance, by layer forming may be deteriorated. In particular, anti-tacking and water resistance may be deteriorated. On the other hand, when the content of the polymerization-reactive urethane oligomer is more than 30 mass%, the printability at the ink-receiving layer provided, for instance, by layer forming may be deteriorated. In particular, drying characteristics and bleeding resistance of the printed images may be deteriorated. It is accordingly preferable that the content of the polymerization-reactive urethane oligomer is 3 mass% to 30 mass%, more preferably 5 mass% to 25 mass%.

When the content of the water-soluble monomer is less than 10 mass%, uniform composition may be less obtainable. On the other hand, when the content of the water-soluble monomer is more than 91 mass%, the printability at the ink-receiving layer provided, for instance, by layer forming may be deteriorated. In particular, drying characteristics and bleeding resistance of the printed images may be deteriorated. It is accordingly preferable that the content of the water-soluble monomer is 10 mass% to 91 mass%, more preferably 29 mass% to 83 mass%.
When the content of the photo polymerization initiator is less than 1 mass%, curing may be insufficient. On the other hand, when the content of the photo polymerization initiator is more than 10 mass%, anti-tacking may be deteriorated. It is accordingly preferable that the content of the photo polymerization initiator is 1 mass% to 10 mass%, more preferably 2 mass% to 6 mass%.

In addition to the hydrophilic polymer, the polymerization-reactive urethane oligomer, the water-soluble monomer and the photo polymerization initiator, the ultraviolet-curable coating agent preferably contains the water-absorptive filler at a content of 3 mass% to 50 mass%.
When the content of the water-absorptive filler is less than 3 mass%, water-based ink may not be sufficiently absorbed. On the other hand, when the content of the water-absorptive filler is more than 50 mass%, viscosity may be increased, thereby hindering the formation of uniform layer. It is accordingly preferable that the content of the water-absorptive filler is 3 mass% to 50 mass%, more preferably 3 mass% to 45 mass%.

### [Advantages of Exemplary Embodiments]

As described above, the ultraviolet-curable coating agent according to the above exemplary embodiment contains the hydrophilic polymer, the polymerization-reactive urethane oligomer, the water-soluble monomer and the photo polymerization initiator.
The combination of the hydrophilic polymer, the polymerization-reactive urethane oligomer and the water-soluble monomer is capable of favorably balancing ink absorptivity and water resistance (feature of the hydrophilic polymer), anti-tacking and water resistance (feature of addition of urethane oligomer) and drying characteristic and bleeding resistance (feature of addition of monomer). Thus, for instance, the ink-receiving layer 2 formed on the front face of the substrate 3 by application can exhibit not only excellent ink absorptivity but also favorable drying characteristics and bleeding resistance of the printed images, anti-tacking and water resistance, thereby providing excellent printability. In addition, since no excessive energy is required to be given to the to-be-applied substrate 3 as compared to thermal curing, degradation of the substrate 3 (e.g., damages to the substrate 3 such as thermal deformation) can be prevented. Thus, the coating agent can be applied onto non-heatable application targets, thereby enhancing general versatility.

According to the above exemplary embodiment, the hydrophilic polymer having the specific structure represented by the general formula (1) is preferably used.
Thus, the absorptivity of water-based ink is increased due to the enhanced water absorptivity, so that the ink-receiving layer 2 formed, for instance, by layer forming can exhibit more excellent printability.

According to the above exemplary embodiment, the polymer having the specific structure formed only of N,N-dimethylaminopropyl acrylamide is preferably used as the hydrophilic polymer.
Thus, the water absorptivity and hydrophobicity can be favorably balanced. The ink-receiving layer 2 formed, for instance, by layer forming can exhibit both absorptivity of water-based ink and water resistance, thereby providing more excellent printability.

According to the above exemplary embodiment, the polymer having the weight average molecular weight of 5000 to 300000 is preferably used as the hydrophilic polymer.
Thus, it is possible to prevent the reduction in anti-tacking due to low-molecular-weight components and the non-uniformity in the applied layer due to increase of the viscosity in the coating agent brought about by high-molecular-weight components. The ink-receiving layer 2 formed, for instance, by layer forming can exhibit more excellent printability.

According to the above exemplary embodiment, the polymerization-reactive urethane oligomer (i.e., material for the ultraviolet-curable coating agent) is preferably formed of, in particular, the carboxyl-group-containing dihydroxyl compound, polymer polyol, organic diisocyanate compound and hydroxyl-group-containing acrylic ester to have the number average molecular weight of 1000 to 10000.
Thus, it is possible to prevent the reduction in anti-tacking due to low-molecular-weight components and the non-uniformity in the applied layer due to increase of the viscosity in the coating agent brought about by high-molecular-weight components. The polymerization-reactive urethane oligomer for providing excellent printability can be easily prepared.

According to the above exemplary embodiment, at least one compound selected from the dimethylol propionic acid and dimethylol butane acid having a number average molecular weight of 50 to 200, which are excellent particularly in drying characteristics and bleeding resistance, is preferably used as the carboxyl-group-containing dihydroxyl compound (i.e., material for the polymerization-reactive urethane oligomer).
Thus, the polymerization-reactive urethane oligomer for providing excellent printability can be easily prepared.

According to the above exemplary embodiment, at least one compound selected from the polycarbonate diol, polyethylene glycol and polypropylene glycol having a number average molecular weight of 300 to 2000, which are excellent particularly in drying characteristics and bleeding resistance, is preferably used as the polymer polyol (i.e., material for the polymerization-reactive urethane oligomer).
Thus, the polymerization-reactive urethane oligomer for providing excellent printability can be easily prepared.

According to the above exemplary emodiment, at least one compound selected from 2,4-toluene diisocyanate, 2,6-toluene diisocyanate, isophorone diisocyanate, hexamethylene diisocyanate, diphenylethylene diisocyanate, xylene diisocyanate, methylenebis(cyclohexyl isocyanate) and trimethylhexamethylene diisocyanate, which are excellent in anti-tacking and water resistance, is preferably used as the organic diisocyanate compound (i.e., material for the polymerization-reactive urethane oligomer).
Thus, the polymerization-reactive urethane oligomer for providing excellent printability can be easily prepared.

According to the above exemplary embodiment, at least one compound selected from 2-hydroxyethyl acrylate, hydroxypropyl acrylate, hydroxybutyl acrylate, caprolactone or alkylene oxide adduct of the 2-hydroxyethyl acrylate, hydroxypropyl acrylate or hydroxybutyl acrylate, and glycerin diacrylate, which are excellent particularly in curability of the applied layer, is preferably used as the hydroxyl-group-containing acrylic ester (i.e., material for the polymerization-reactive urethane oligomer).
Thus, the polymerization-reactive urethane oligomer for providing excellent printability can be easily prepared.

According to the above exemplary embodiment, the monomer containing 50 mass% or more of acryloyl morpholine is preferably used as the water-soluble monomer.
Thus, the addition of the monomer can particularly enhance drying characteristics and bleeding resistance. The ink-receiving layer 2 formed, for instance, by layer forming can provide more excellent printability.

According to the above exemplary embodiment, it is particularly preferable that: the content of the hydrophilic polymer is 5 mass% to 50 mass%; the content of the polymerization-reactive urethane oligomer is 3 mass% to 30 mass%; and the content of the water-soluble monomer is 10 mass% to 91 mass%.
Thus, ink absorptivity and water resistance (feature of the hydrophilic polymer), anti-tacking and water resistance (feature of addition of oligomer) and drying characteristic and bleeding resistance (feature of addition of monomer) can be favorably balanced. The ink-receiving layer 2 formed, for instance, by layer forming can exhibit excellent printability.

In addition to the hydrophilic polymer, the polymerization-reactive urethane oligomer, the water-soluble monomer and the photo polymerization initiator, the ultraviolet-curable coating agent preferably contains the water-absorptive filler at a content of 3 mass% to 50 mass%.
Thus, the addition of the filler can particularly enhance drying characteristics and water resistance. The ink-receiving layer 2 formed, for instance, by layer forming can provide more excellent printability.

### [Modification of Exemplary Embodiments]

The above-described embodiments merely exemplify an aspect of the invention, so that the invention is not limited thereto. Not to mention, any modification and improvement compatible with the invention are included in the scope of the invention. Further, the specific structures and shapes in practicing the invention may be altered to any other structure and shape as long as such alterations are compatible with the invention.

Specifically, while the substrate 3 is exemplified by the disk substrate formed of polycarbonate resin in the above exemplary embodiment, the substrate is not limited thereto but may be a cartridge that houses the information recording medium 1 such as DVD-RAM, cassette tape and MO. The ink-receiving layer 2 may be provided to the front surface of such cartridge substrate 3. As described above, the substrate may alternatively be any other substrate such as printing sheets (e.g., printing label sheets) for use in various information recording mediums, synthetic-resin moldings, glass, wooden materials, steel plates, leather products and woven or nonwoven textiles.
The ultraviolet-curable coating agent may be a one-pack agent exemplarily containing the hydrophilic polymer, the polymerization-reactive urethane oligomer, the water-soluble monomer and the photo polymerization initiator, or may be a two-pack agent to be added with the photo polymerization initiator at the time of forming the ink-receiving layer 2 by application. In other words, the ultraviolet-curable coating agent may be of any type.

### Examples

Next, the invention will be described in further detail below with reference to examples and comparatives, but is not limited at all to the description of the examples and the like.

### {Preparation of Samples}

### (Synthesis of Hydrophilic Polymer)

As the material for the ultraviolet-curable coating agent, the various hydrophilic polymers as listed below were prepared.

### Hydrophilic Polymer (a)

60 g of N,N-dimethylaminopropyl acrylamide (manufactured by Kohjin Co., Ltd.) and 510 g of methanol (manufactured by Wako Pure Chemical Industries, Ltd.) were put into a 1-litter separable flask (manufactured by Sansho Co. Ltd.) equipped with a cooling tube, nitrogen introduction tube and agitation blade. Then, while agitation was being conducted in the flask, the reaction flask was subjected to nitrogen-gas replacement (nitrogen gas was manufactured by Tomoe Shokai Co., Ltd.). Subsequently, a solution prepared by dissolving 0.64 g of azobisisobutylonitrile (manufactured by Wako Pure Chemical Industries, Ltd.) in 30 g of methanol was added. The flask was warmed up to 65 degrees C, and polymerization reaction was conducted for 8 hours. After the polymerization reaction, the solvent of the reaction solution was distilled away under reduced pressure at 30 degrees C, and 57 g of brownish yellow solid was obtained.
The brownish yellow solid was subjected to GPC (gel permeation chromatography) analysis at an eluant flow rate of 1 ml/min and a column temperature of 30 degrees C, in which: a mixed aqueous solution beforehand prepared by mixing 0.1M of sodium nitrate (manufactured by Wako Pure Chemical Industries, Ltd.) and 0.5M of acetic acid (manufactured by Wako Pure Chemical Industries, Ltd.) was used as the eluant; polyethylene oxide was used as the standard substance; and Ultrahydrogel 500 (trade name, manufactured by Waters Corporation) was used as the column. The result showed that the weight average molecular weight of the brownish yellow solid was 25500.

### Hydrophilic Polymer (b)

30 g of N,N-dimethylaminopropyl acrylamide and 540 g of isopropyl alcohol (manufactured by Wako Pure Chemical Industries, Ltd.) were put into the above-described separable flask. Then, as described above, while agitation was being conducted in the flask, the reaction flask was subjected to nitrogen-gas replacement. Subsequently, a solution prepared by dissolving 0.64 g of azobisisobutylonitrile in 30 g of isopropyl alcohol was added. The flask was warmed up to 75 degrees C, and polymerization reaction was conducted for 8 hours. After the polymerization reaction, the solvent of the reaction solution was distilled away under reduced pressure at 30 degrees C, and 27g of brownish yellow solid was obtained.
According to the result of GPC analysis conducted in the above descried manner, the weight average molecular weight of the brownish yellow solid was 7300.

### Hydrophilic Polymer (c)

120g of N,N-dimethylaminopropyl acrylamide and 450g of methanol were put into the above-described separable flask. Then, as described above, while agitation was being conducted in the flask, the reaction flask was subjected to nitrogen-gas replacement. Subsequently, a solution prepared by dissolving 0.32g of azobisisobutylonitrile in 30 g of methanol was added. The flask was warmed up to 65 degrees C, and polymerization reaction was conducted for 8 hours. After the polymerization reaction, the solvent of the reaction solution was distilled away under reduced pressure at 30 degrees C, and 118g of brownish yellow solid was obtained.
According to the result of GPC analysis conducted in the above descried manner, the weight average molecular weight of the brownish yellow solid was 118000.

### Hydrophilic Polymer (d)

30 g of N,N-dimethylaminopropyl acrylamide and 540 g of isopropyl alcohol were put into the above-described separable flask. Then, as described above, while agitation was being conducted in the flask, the reaction flask was subjected to nitrogen-gas replacement. Subsequently, a solution prepared by dissolving 1.28g of azobisisobutylonitrile in 30 g of isopropyl alcohol was added. The flask was warmed up to 75 degrees C, and polymerization reaction was conducted for 8 hours. After the polymerization reaction, the solvent of the reaction solution was distilled away under reduced pressure at 30 degrees C, and 27g of brownish yellow solid was obtained.
According to the result of GPC analysis conducted in the above descried manner, the weight average molecular weight of the brownish yellow solid was 3400.

### Hydrophilic Polymer (e)

30 g of N,N-dimethyl acrylamide (manufactured by Kohjin Co., Ltd.), 0.28 g of mercaptoacetic acid and 540 g of isopropyl alcohol were put into the above-described separable flask. Then, as described above, while agitation was being conducted in the flask, the reaction flask was subjected to nitrogen-gas replacement. Subsequently, a solution prepared by dissolving 0.5g of azobisisobutylonitrile in 30 g of isopropyl alcohol was added. The flask was warmed up to 75 degrees C, and polymerization reaction was conducted for 8 hours. After the polymerization reaction, the solvent of the reaction solution was distilled away under reduced pressure at 30 degrees C, and 27g of brownish yellow solid was obtained.
According to the result of GPC analysis conducted in the above descried manner, the weight average molecular weight of the brownish yellow solid was 10900.

(Synthesis of Oligomer)

Next, as the material for the ultraviolet-curable coating agent, the various oligomers as listed below were prepared.

### Oligomer (a)

1.0 mol of polyethylene glycol having a number average molecular weight of 600 (manufactured by NOF Corporation, trade name: PEG#600), 1.0 mol of dimethylol butane acid (manufactured by Nippon Kasei Chemical Co., Ltd, trade name: DMBA) and 3.0 mol of hexamethylene diisocyanate (manufactured by Sumika Bayer Urethane Co., Ltd., trade mark: Desmodur H) were reacted together at 80 degrees C, and 2.2 mol of 2-hydroxyethyl acrylate (manufactured by Nippon Shokubai Co., Ltd., trade name: BHEA) was subsequently reacted at 80 degrees C. Then, an oligomer (a) having a number average molecular weight of 1500 was obtained.
The number average molecular weight was detected and measured by a detector (manufactured by Showa Denko K.K., trade name: Shodax RI-71) at a temperature of 40 degrees C and flow rate of 1.0 mol/min, in which: a column manufactured by Showa Denko K.K. (trade name: Shodex KF-804L × 4) was used; and tetrahydrofuran was used as the eluant.

### Oligomer (b)

2.0 mol of polycarbonate diol having a number average molecular weight of 800 (manufactured by Asahi Kasei Chemicals Corporation, trade name: PCDL T-5056J), 2.0 mol of dimethylol butane acid and 5.0 mol of hexamethylene diisocyanate were reacted together at 80 degrees C, and 2.2 mol of 2-hydroxyethyl acrylate was subsequently reacted at 80 degrees C. Then, an oligomer (b) having a number average molecular weight of 3000 was obtained.

### Oligomer (c)

5.2 mol of polyethylene glycol having a number average molecular weight of 600, 5.2 mol of dimethylol butane acid and 11.4 mol of hexamethylene diisocyanate were reacted together at 80 degrees C, and 2.2 mol of 2-hydroxyethyl acrylate was subsequently reacted at 80 degrees C. Then, an oligomer (c) having a number average molecular weight of 6000 was obtained.

### Oligomer (d)

3.4 mol of polyethylene glycol having a number average molecular weight of 600, 4.4 mol of hexamethylene diisocyanate were reacted together at 80 degrees C, and 2.2 mol of 2-hydroxyethyl acrylate was subsequently reacted at 80 degrees C. Then, an oligomer (d) having a number average molecular weight of 3000 was obtained.

### Oligomer (e)

1.3 mol of dimethylol butane acid and 2.3 mol of hexamethylene diisocyanate were reacted together at 80 degrees C, and 2.2 mol of 2-hydroxyethyl acrylate was subsequently reacted at 80 degrees C. Then, an oligomer (e) having a number average molecular weight of 8000 was obtained.

### Oligomer (f)

3.5 mol of dimethylol butane acid and 4.5 mol of hexamethylene diisocyanate were reacted together at 80 degrees C, and 2.2 mol of 2-hydroxyethyl acrylate was subsequently reacted at 80 degrees C. Then, an oligomer (f) having a number average molecular weight of 1500 was obtained.

### (Preparation of Samples)

Materials of predetermined amounts were measured to satisfy the blending ratios shown in Tables 1 and 2, and the materials were mixed together by a mixer (manufactured by THINKY Corporation, trade name: A-250).

**Table 1**

| | | Unit | Example 1 | example 2 | Example 3 | Example 4 | Example 5 | Example 6 | Example 7 | Example 8 | Example 9 |
|---|---|---|---|---|---|---|---|---|---|---|---|
| Polymer | Polymer (a) | Mass% | 30 | 30 | 30 | 25 | | | 35 | 7 | 25 |
| | Polymer (b) | | | | | | 15 | | | | |
| | Polymer (c) | | | | | | 15 | 20 | | | |
| | Polymer (d) | | | | | | | | | | |
| | Polymer (e) | | | | | | | | | | |
| Oligomer | Oligomer (a) | Mass% | 15 | | | 15 | 15 | 15 | 15 | 7 | 10 |
| | Oligomer (b) | | | 10 | | | | | | | |
| | Oligomer (c) | | | | 5 | | | | | | |
| | Oligomer (d) | | | | | 5 | | | | | |
| | Oligomer (e) | | | | | | | | | | |
| | Oligomer (f) | | | | | | | | | | |
| Monomer | Acryloyl Morpholine | Mass% | 51 | 56 | 61 | 51 | 51 | 61 | 36 | 52 | 56 |
| | Dimetlwlaminopropyl Acrylamide | | | | | | | | | | |
| | 2-hydroxyethyl acrylate | | | | | | | | 10 | | |
| Filler | Silk Powder(*1) | Mass% | | | | | | | | 30 | |
| | Silica Particle (*2) | | | | | | | | | | 5 |
| Initiator | DAROCUR 1173 (*3) | Mass% | 4 | 4 | 4 | 4 | 4 | 4 | 4 | 4 | 4 |
| Total | | Mass% | 100 | 100 | 100 | 100 | 100 | 100 | 100 | 100 | 100 |
| Evaluation Results | | Drying Characteristics | A | A | A | A | B | A | A | A | A |
| | | Bleeding Resistance | B | A | A | B | A | B | B | B | B |
| | | Anti-Tacking | B | B | C | B | B | B | B | A | A |
| | | Water Resistance | A | B | B | A | B | B | B | B | B |

| | | | | | | | | | | | |
|---|---|---|---|---|---|---|---|---|---|---|---|
| (*1) K-SF (Manufactured by Idemitsu Technofine Co., Ltd) (*2) AEROSIL 300 (Manufactured by Japan Aerosil Co., Ltd) (*3) Manufactured by Ciba Special Chemicals Corporation | | | | | | | | | | | |

**Table 2**

| | | Unit | Comparative 1 | Comparative 2 | Comparative 3 | Comparative 4 | Comparative 5 | Comparative 6 | Comparative 7 | Comparative 8 | Comparative 9 |
|---|---|---|---|---|---|---|---|---|---|---|---|
| Polymer | Polymer (a) | Mass% | 30 | 30 | 30 | | | 55 | | 5 | 30 |
| | Polymer (b) | | | | | | | | | | |
| | Polymer (c) | | | | | | | | | | |
| | Polymer (d) | | | | | 35 | | | | | |
| | Polymer (e) | | | | | | 30 | | | | |
| Oligomer | Oligomer (a) | Mass% | | | | 15 | 15 | 5 | 15 | 35 | |
| | Oligomer (b) | | | | | | | | | | |
| | Oligomer (c) | | | | | | | | | | |
| | Oligomer (d) | | 10 | | | | | | | | |
| | Oligomer (e) | | | 15 | | | | | | | |
| | Oligomer (f) | | | | 15 | | | | | | |
| Monomer | Acryloyl Morpholine | Mass% | 56 | 51 | 51 | 46 | 51 | 36 | 51 | 56 | 66 |
| | Dimethyl aminopropyl Acrylamide | | | | | | | | 30 | | |
| | 2-hydroxyethyl acrylate | | | | | | | | | | |
| Filler | Silk Powder (*1) | Mass% | | | | | | | | | |
| | Silica Particle (*2) | | | | | | | | | | |
| Initiator | DAROCUR 1173 (*3) | Mass% | 4 | 4 | 4 | 4 | 4 | 4 | 4 | 4 | 4 |
| Total | | Mass% | 100 | 100 | 100 | 100 | 100 | 100 | 100 | 100 | 100 |
| Evaluation Results | | Drying Characteristics | A | D | B | D | D | A | D | B | A |
| | | Bleeding Resistance | A | D | B | D | C | A | B | D | B |
| | | Anti-Tacking | B | C | D | C | D | D | C | B | D |
| | | Water Resistance | D | C | B | C | C | C | C | B | D |

| | | | | | | | | | | | |
|---|---|---|---|---|---|---|---|---|---|---|---|
| (*1) K-SF (Manufactured by Idemitsu Technofine Co., Ltd.) (*2) AEROSIL300 (Manufactured by Japan Aerosil Co., Ltd.) (*3) Manufactured by Ciba Special Chemicals Corporation | | | | | | | | | | | |

### (Formation of Ink-Receiving Layer)

The samples prepared as in the above were applied onto 100-µm-thick PET (polyethylene terephthalate) films (manufactured by TORAY Corporation, trade name: Lumirror T100) by a bar coater (manufactured by R K Print Coat Instruments Ltd, trade name K-202) to be 15 to 25 µm thick.
Then, the applied layers were cured with use of an ultraviolet irradiator (manufactured by GS Yuasa Lighting LTD, trade name: CSOT-40) at an integral irradiation quantity of 200 mJ/cm² to form ink-receiving layers.

### (Evaluation of Printability)

On the above-described ink-receiving layers, black, blue, yellow and red solid images were printed by an ink-jet color printer (manufactured by Seiko Epson Corporation, trade name: PM-G820) to be located adjacently to each other. Then, printed conditions were comparatively evaluated. Evaluation of the printed conditions were conducted in four stages of drying characteristics, bleeding resistance, anti-tacking and water resistance as shown below. Specifically, considerably favorable printed conditions were rated as "A", favorable printed conditions were rated as "B", somewhat inferior printed conditions were rated as "C" and considerably inferior printed conditions were rated as "D". The evaluation results are also shown in Tables 1 and 2.
Drying Characteristics
In 5 minutes after the printing, a paper sheet (manufactured by ASKUL Corporation, trade name: multi paper super economy) was pressed onto the printed surfaces, and the degrees to which the ink was transferred to the paper sheet were evaluated.
Bleeding Resistance
The degrees of bleeding resistance of the images printed on the applied layers were evaluated.
Anti-Tacking
The degrees to which the images printed on the applied layers adhered to fingers were evaluated.
Water Resistance
Water was dropped on the images printed on the applied layer, and the water was wiped off with a paper sheet (manufactured by NIPPON PAPER CRECIAL Co., LTD., trade name: KIMWIPES Wiper L100) in 3 minutes. Then, bleeding resistance of the printed images and uniformity of the applied layers were evaluated.

(Results)
According to the results shown in Tables 1 and 2, Examples 1 to 9 in which the hydrophilic polymer, polymerization-reactive urethane oligomer, water-soluble monomer and photo polymerization initiator were contained at predetermined ratios have been found to exhibit comprehensively favorable printability, which was not observed in Comparatives 1 to 9 in which the same materials were contained at different ratios.

### Industrial Applicability

The invention is applicable to compact discs and other information recording mediums where ink-receiving layers are provided on substrates, and also to molded products other than information recording mediums.

## Claims

1. An ultraviolet-curable coating agent to be cured with ultraviolet, comprising:
a hydrophilic polymer;
a polymerization-reactive urethane oligomer;
a water-soluble monomer; and
a photo polymerization initiator, wherein
the hydrophilic polymer has a structure represented by a general formula (1) as follows, 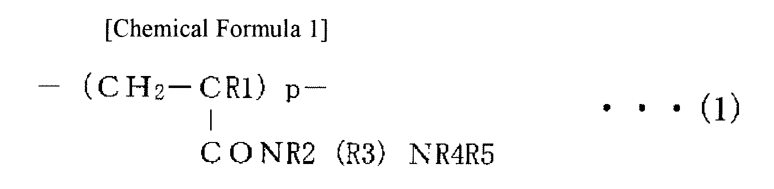
where: P represents an integer of 2 or more;
R1 represents -H or -CH₃;
R2 represents -H or an alkyl group represented by -CₘH₂ₘ+1 (in which m is an integer of 1 to 8);
R3 represents an alkylene group represented by -CₙH₂ₙ- (in which n is an integer of 1 to 8); and
R4 and R5 each represent -H or an alkyl group represented by -CₒH₂ₒ+1 (in which o is an integer of 1 to 8), and
a material for the polymerization-reactive urethane oligomer is a carboxyl-group-containing dihydroxyl compound, polymer polyol, organic diisocyanate compound and hydroxyl-group-containing acrylic ester, a number average molecular weight of the polymerization-reactive urethane oligomer being 1000 to 10000.

2. The ultraviolet-curable coating agent according to claim 1, wherein the hydrophilic polymer is a polymer formed only of N,N-dimethylaminopropyl acrylamide.

3. The ultraviolet-curable coating agent according to claim 1 or 2, wherein the hydrophilic polymer has a weight average molecular weight of 5000 to 300000.

4. The ultraviolet-curable coating agent according to any one of claims 1 to 3, wherein the carboxyl-group-containing dihydroxyl compound has a number average molecular weight of 50 to 200, the carboxyl-group-containing dihydroxyl compound being at least one compound selected from dimethylol propionic acid and dimethylol butane acid.

5. The ultraviolet-curable coating agent according to any one of claims 1 to 4, wherein the polymer polyol has a number average molecular weight of 300 to 2000, the polymer polyol being at least one compound selected from polycarbonate diol, polyethylene glycol and polypropylene glycol.

6. The ultraviolet-curable coating agent according to any one of claims 1 to 5, wherein the organic diisocyanate compound is at least one compound selected from 2,4-toluene diisocyanate, 2,6-toluene diisocyanate, isophorone diisocyanate, hexamethylene diisocyanate, diphenylethylene diisocyanate, xylene diisocyanate, methylenebis(cyclohexyl isocyanate) and trimethylhexamethylene diisocyanate.

7. The ultraviolet-curable coating agent according to any one of claims 1 to 6, wherein the hydroxyl-group-containing acrylic ester is at least one compound selected from 2-hydroxyethyl acrylate, hydroxypropyl acrylate, hydroxybutyl acrylate, caprolactone or alkylene oxide adduct of the 2-hydroxyethyl acrylate, hydroxypropyl acrylate or hydroxybutyl acrylate, and glycerin diacrylate.

8. The ultraviolet-curable coating agent according to any one of claims 1 to 7, wherein the water-soluble monomer contains 50 mass% or more of acryloyl morpholine.

9. The ultraviolet-curable coating agent according to any one of claims 1 to 8, wherein
a content of the hydrophilic polymer is 5 mass% to 50 mass%,
a content of the polymerization-reactive urethane oligomer is 3 mass% to 30 mass%,
a content of the water-soluble monomer is 10 mass% to 91 mass%, and
a content of the photo polymerization initiator is 1 mass% to 10 mass%.

10. The ultraviolet-curable coating agent according to any one of claims 1 to 9, wherein a water-absorptive filler is contained at a content of 3 mass% to 50 mass% in addition to the hydrophilic polymer, the polymerization-reactive urethane oligomer, the water-soluble monomer and the photo polymerization initiator.

11. A molded product, comprising the ultraviolet-curable coating agent according to any one of claims 1 to 10 applied on a front face of a substrate.

12. The molded product according to claim 11, wherein the ultraviolet-curable coating agent is applied on the front face of the substrate to form an ink-receiving layer.
